# DEMANDE DE BREVET EUROPEEN

(11) **EP 2 444 331 A1**
(43) Date de publication de la demande: **25.04.2012**
(21) Numéro de dépôt: 10188610.9
(22) Date de dépôt: 22.10.2010
(51) Int. Cl.: B65D 35/10, B29C 65/40

(54) **Emballage flexible fabriqué par soudage et contenant une matière recyclée ou issue de ressources renouvelables**

(71) Demandeur: Aisapack Holding SA, 1896 Vouvry (CH)
(72) Inventeur: Medico, Léonard, 1896, Vouvry (CH); Thomasset, Jacques, 1896, Vouvry (CH); Roy, Hugues-Vincent, 1896, Vouvry (CH); Mathieu, Stéphane, 1896, Vouvry (CH)
(74) Mandataire: Grosfillier, Philippe

(57) **Abrégé**

L'emballage souple de forme essentiellement tubulaire destiné à contenir un produit semi-liquide ou pâteux comprend une jupe, une tête et optionnellement un bouchon, la jupe étant formée par une feuille enroulée et comportant une soudure longitudinale permettant l'assemblage de ses bords ; la tête étant fixée sur le pourtour de l'une des extrémités de la jupe. La jupe comprend un taux d'au moins 30% de matière recyclée ou de matière issue de ressources renouvelables et il comporte un ajout de matière au moins sur le côté intérieur de la jupe de façon à supprimer une discontinuité de la face interne dans la zone de la soudure longitudinale.

## Description

### DOMAINE DE L'INVENTION

L'invention se situe dans le domaine des emballages de forme tubulaire destinés à contenir, par exemple, de la pâte dentifrice, des produits cométiques ou alimentaires. L'emballage est fabriqué par assemblage de composants préfabriqués et comporte au moins une tête, une jupe et optionnellement un bouchon. L'emballage peut également comporter un fond préfabriqué.

### ETAT DE LA TECHNIQUE

Dans de tels emballages, la tête a sensiblement la forme d'un tronc de cône sur lequel se situe un cylindre formant le col et dont la face externe peut être filetée afin de recevoir un bouchon qui vient s'y visser. Alternativement, la face externe du col n'est pas filetée, le bouchon venant se fixer par simple pression. Généralement, la tête et le bouchon sont des pièces plastiques réalisées par injection moulage ou compression moulage.

La jupe une fois formée, a une forme sensiblement tubulaire. Elle est produite à partir de rouleaux de laminé multicouche imprimés ou vierges.

Quand l'emballage comporte un fond, ce dernier présente une géométrie sensiblement plane dont la circonférence a une géométrie circulaire

Un procédé courant de fabrication de ces emballages comprend au moins les étapes suivantes :
- On enroule et soude autour d'une tige de section circulaire un laminé de manière à former un tube cylindrique en continu. Le cylindre est ensuite découpé en jupes de longueur déterminée.
- La tête est automatiquement chargée dans le dispositif,
- La tête est fixée à l'une des extrémités de la jupe.

Un autre procédé de fabrication de ces emballages comprend au moins les étapes suivantes :
- On enroule et soude autour d'une tige de section circulaire un laminé de manière à former un tube cylindrique en continu. Le cylindre est ensuite découpé en jupes de longueur déterminée.
- La tête est surmoulée par injection ou compression moulage à l'une des extrémités de la jupe.
Lorsque l'emballage comporte un fond,
- Le fond est automatiquement chargé dans le dispositif.
- Le fond est fixé sur la deuxième extrémité de la jupe.

### PRINCIPE DE L'INVENTION

Un but de l'invention et de fabriquer un tube flexible ou une bouteille flexible par soudage, ledit tube ou ladite bouteille comportant un taux en volume de matière recyclée ou de matière issue de ressources renouvelables supérieur à 30%, de préférence supérieur à 50%.

La réalisation d'emballages ayant les caractéristiques décrites ci-dessus, notamment une proportion de matière recyclée ou issue de ressources renouvelables, comporte plusieurs difficultés. La principale difficulté vient du fait que le corps tubulaire de l'emballage, qui est obtenu par soudage d'une feuille généralement multicouche (appelée par la suite "laminé"), comporte au niveau de ladite zone de soudure une discontinuité au moins de la couche interne rendant problématique l'assemblage de la tête du tube sur le dit corps tubulaire. Au niveau de cet assemblage, ladite discontinuité génère des défauts sur l'emballage fabriqué tel que des fuites ou des défauts d'aspect le rendant impropre à la vente.

En effet, les laminés utilisés pour la fabrication de corps tubulaire par soudage et comportant un fort pourcentage de matière recyclée ou issue de ressources renouvelables sont souvent difficile à comprimer. C'est le cas par exemple de laminés comportant un taux de fibre de cellulose important. Si ces laminés peuvent être soudés lorsque ledit laminé comporte une couche soudable en surface, par contre la soudure obtenue est quasiment incompressible et par conséquent la surface interne du corps tubulaire présente une forte discontinuité au niveau de la soudure ; ladite discontinuité étant à l'origine des défauts rencontrés lors de l'assemblage du corps tubulaire et de la tête de tube.

Certains corps tubulaires comportant une forte proportion de matière recyclée ou issue de ressources renouvelables pourraient être comprimés au niveau de la zone de soudure lorsque lesdites matières sont suffisamment fluides lors de la compression de façon à surmonter le problème mentionné ci-dessus. Cependant, dans de nombreux cas, ces matières recyclées ou issues de ressources renouvelables ne peuvent pas être utilisées en contact direct avec les produits contenus dans l'emballage ce qui interdit la compression de la zone soudée. En effet, ladite compression aurait pour conséquence l'expulsion sur la face interne de l'emballage de la résine recyclée emprisonnée et inapte au contact alimentaire. Il est connu en effet que les matières recyclées ne sont pas toutes habilitées au contact alimentaire ce qui rend difficile leur usage en grande quantité dans la confection de tubes par soudage.

Dans l'exposé de l'invention, les termes et abréviations suivants sont utilisés :
● Matière recyclée : matière extraite du circuit des déchets.
● Matière issue de ressources renouvelables : matière que l'on obtient à partir d'une ressource naturelle dont le stock peut se reconstituer sur une période courte à l'échelle humaine.
● Matière vierge : matière habilitée au contact alimentaire
● PE : polyéthylène
● EVOH : éthylène vinyle alcool
● PET : polyéthylène téréphtalate

Pour surmonter les problèmes identifiés ci-dessus, l'invention comprend notamment un ajout de matière sur la face interne du corps tubulaire à l'endroit de la soudure longitudinale ; ledit ajout de matière ayant pour effet de supprimer la discontinuité de la surface interne au niveau de la soudure ; et ledit ajout de matière ayant pour conséquence de faciliter l'assemblage de la tête de tube sur ledit corps tubulaire.

Selon l'invention, l'ajout de matière comprend au moins une couche de matière le rendant soudable sur la surface interne du corps tubulaire et le rendant soudable sur la tête de tube. L'ajout de matière peut être monocouche ou multicouche. Un ajout de matière multicouche permet d'améliorer les propriétés barrières de l'emballage, et permet d'éviter la migration par la tranche du laminé des substances contenues dans les couches recyclées et inapte au contact alimentaire. L'ajout de matière multicouche peut permettre également de renforcer la zone soudée, ledit renfort étant particulièrement utile lorsque les couches recyclées comportent un taux élevé de charges ou de matières non soudantes.

L'ajout de matière permet de lisser la surface interne du corps tubulaire pour faciliter l'opération d'assemblage de la tête de tube et du corps tubulaire. Le principe de l'ajout de matière selon la présente invention peut être également utilisé pour supprimer la discontinuité de la surface externe du corps tubulaire afin d'en améliorer l'esthétique, la résistance et d'imperméabilité.

Dans un premier mode de réalisation de l'invention, on extrude ou co-extrude l'ajout de matière au moment de la soudure longitudinale ou postérieurement à la soudure longitudinale.

Dans un second mode de l'invention, on utilise un cordon de soudure ou d'une bande de soudure que l'on vient faire fondre au moins partiellement au moment de l'application sur le corps tubulaire. Les couches fondues doivent représenter au moins 50% en volume dudit cordon ou de ladite bande pour supprimer la discontinuité de la couche interne du corps tubulaire.

L'invention peut être appliquée aux différentes configurations de soudage du laminé. L'invention peut être utilisée lorsque le laminé est soudé par recouvrement des deux extrémités, configuration dans laquelle la couche externe est soudée sur la couche interne du laminé.

L'invention peut également être utilisée lorsque la face interne du laminé est soudée sur elle-même.

Et finalement l'invention peut être utilisée lorsque les extrémités du laminé sont soudées bout à bout.

### BREVE DESCRIPTION DES FIGURES

L'invention sera mieux comprise à l'aide des figures 1 à 6 dans lesquelles
La figure 1 montre, au niveau de la zone de soudure, le corps tubulaire obtenu par soudage d'un laminé.
La figure 2 illustre les imperfections de l'assemblage de la tête de tube et du corps tubulaire présenté figure 1.
Les figures 3 à 6 illustrent l'invention et plus précisément

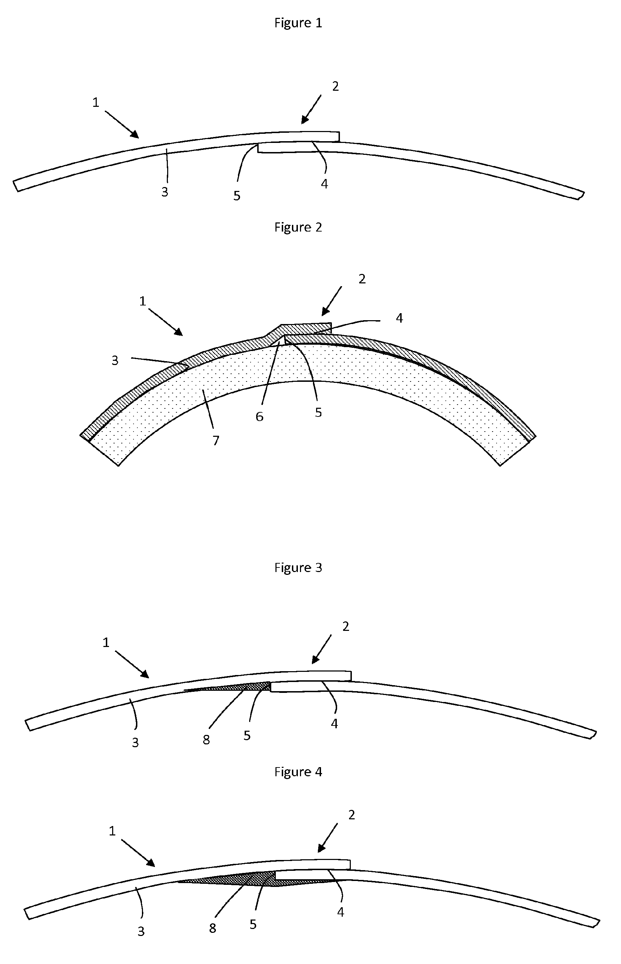

La figure 3 montre l'utilisation d'un ajout de matière pour compenser la discontinuité de la zone de soudure lorsque le laminé est soudé par chevauchement de ses extrémités.
La figure 4 illustre une variante selon laquelle l'extrémité inférieure du laminé est complètement emprisonnée dans l'ajout de matière.

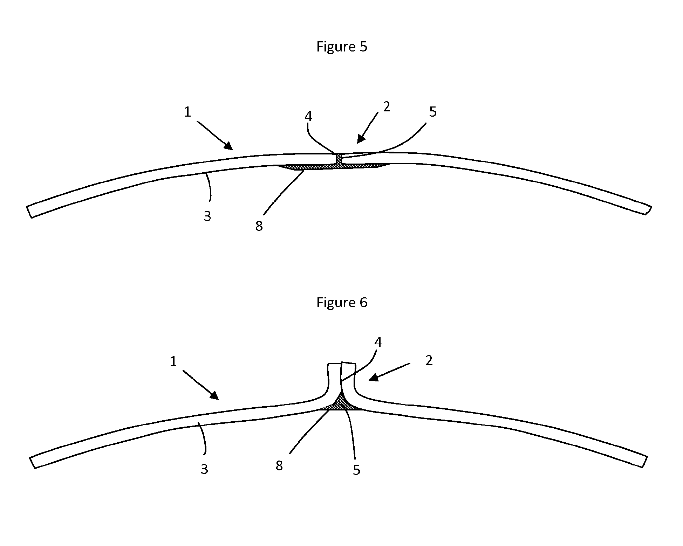

La figure 5 montre l'application de l'invention lorsque le laminé est soudé bout à bout.
La figure 6 illustre l'invention lorsque la face interne du laminé est soudée sur elle-même.

### DESCRIPTION DETAILLEE DE L'INVENTION

Les figures 1 et 2 permettent de comprendre le problème à résoudre.
La figure 1 présente un corps tubulaire 1 formé par soudage d'un laminé 3 comportant un taux de matière recyclée ou issue de ressources renouvelables supérieur à 30%. La surface interne du laminé 3 est soudée sur la face externe du laminé 3 par recouvrement des extrémités dudit laminé. Cet assemblage présente l'avantage d'une bonne résistance de la soudure car la longueur de l'interface soudé 4 peut être ajustée en fonction des propriétés recherchées. Cependant, du fait de l'usage de laminés comportant un certain pourcentage de matière recyclée, la zone de soudure 2 du laminé est très peu comprimée ce qui engendre une forte discontinuité 5 de la surface interne du corps tubulaire. Cette discontinuité 5 est à l'origine des difficultés rencontrées lors de l'assemblage de la tête de tube et dudit corps tubulaire. Il existe plusieurs raisons pour lesquelles la zone soudée 2 n'est pas comprimée.

Dans un premier cas, la faible compression de la zone soudée 2 est directement liée à la nature des couches formant le laminé. La compression est difficile par exemple lorsque le laminé comporte un fort pourcentage de couches qui ne fondent pas pendant l'opération de soudage, c'est le cas notamment des laminés comportant un fort pourcentage de fibre de cellulose.

Dans un deuxième cas, la zone soudée 2 ne peut être comprimée pour des raisons d'hygiène. C'est le cas notamment lorsque le laminé comporte un fort pourcentage de matières recyclées qui ne peuvent être utilisées en contact avec le produit contenu dans l'emballage. L'action de compression de la zone soudée 2 aurait pour effet d'expulser sur la face interne de l'emballage des matières inaptes au contact alimentaire.

Dans un troisième cas, la zone 2 n'est pas comprimée pour éviter d'expulser en surface interne du corps tubulaire 1 des matières qui ne pourraient se souder sur la tête de tube. C'est le cas de matières issues de ressources renouvelables mais dont l'aptitude au soudage est mauvaise.

Ainsi, dans le cas de corps tubulaires comportant une forte proportion de matière recyclée ou issu de ressources renouvelables, la zone de soudure 2 n'est généralement pas comprimée pour les raisons exposées précédemment. Il en résulte la forte discontinuité 5 qui génère des défauts de l'emballage lors de l'assemblage sur la tête de tube.

La figure 2 illustre les défauts obtenus lors de l'assemblage par soudage du corps tubulaire 1 décrit figure 1 sur une tête de tube 7. Plus précisément, la figure 2 montre la vue en coupe d'une partie de l'assemblage entre le corps tubulaire 1 et de la tête de tube 7.

Lorsque l'assemblage de la tête de tube 7 et du corps tubulaire 1 est fait par soudage, il est observé, au niveau de la discontinuité 5, une zone non soudée entre le corps tubulaire et la tête de tube formant un passage entre l'intérieur et extérieur de l'emballage. Cette fuite 6 au niveau de la discontinuité 5 empêche l'utilisation desdits emballages à des fins commerciales. Lorsque l'assemblage du corps tubulaire 1 et de la tête de tube 7 est fait par surmoulage de la tête de tube 7 sur le corps tubulaire 1, il se créée également un défaut au niveau de la discontinuité 5. En effet, pendant l'opération de moulage, lorsque la résine fondue arrive au niveau de la discontinuité 5, elle s'échappe de la cavité du moule par le canal formé par la discontinuité 5. La résine qui s'échappe ainsi se retrouve soudée au corps tubulaire 1 le long de la discontinuité 5 et génère un défaut d'aspect. La rigidité du corps tubulaire 1 se trouve également modifiée au niveau de la fuite de résine, ce qui nuit à l'esthétique et aux propriétés d'usage de l'emballage.

La figure 3 illustre un premier mode de réalisation de l'invention. Ce mode de réalisation comprend un ajout de matière 8 sur la face interne du corps tubulaire 1 au niveau de la discontinuité 5. Cet ajout de matière 8 vient lisser la surface interne du corps tubulaire 1 au niveau de la discontinuité 5. L'ajout de matière 8, qui est monocouche ou multicouche, représente un faible pourcentage du corps tubulaire. Le choix des matières doit prendre en compte la nécessité de soudage de l'ajout de matière 8 à la fois sur la face interne du corps tubulaire et sur la face externe de la tête de tube. Dans le cas d'un ajout de matière 8 multicouche, ledit ajout comportera au moins une couche permettant de le souder sur la face interne du laminé et la face externe de l'épaule. L'utilisation d'un ajout de matière multicouche peut s'avérer avantageux pour limiter par exemple la perméabilité de l'emballage au niveau de l'interface soudé 4 et limiter par exemple la migration des molécules d'oxygène qui pénètrent dans l'emballage. Un autre intérêt serait également de limiter la migration par la tranche du laminé de substances emprisonnées dans l'épaisseur du laminé et inversement limiter la migration par la tranche du laminé de substances contenues dans le produit emballé. L'ajout de matière ne comporte généralement pas de matières recyclées car il se trouve en contact direct avec le produit emballé.

La figure 4 illustre une variante du premier mode de réalisation de l'invention selon lequel l'ajout de matière 8 vient lisser la discontinuité 5 et encapsule totalement l'extrémité du laminé 3. Cette encapsulation est particulièrement avantageuse lorsque le laminé comporte au moins une couche de faible cohésion. L'encapsulation de l'extrémité du laminé permet de renforcer la soudure 4. La variante illustrée figure 4 est particulièrement intéressante lorsque le laminé comporte un fort taux de papier recyclé ou de matière recyclée de second choix.

Une variante non illustrée du premier mode de réalisation consiste à faire un deuxième ajout de matière sur la face externe du corps tubulaire au niveau de la discontinuité. Cet ajout de matière peut permettre d'améliorer l'esthétique, les propriétés mécaniques ou les propriétés barrières de l'emballage.

La figure 5 illustre un second mode de réalisation de l'invention dans lequel le laminé est disposé bout à bout. Le soudage bout à bout de laminés comportant un fort pourcentage de couches recyclées ou issues de ressources renouvelables présente de nombreuses difficultés car seul un faible pourcentage de l'épaisseur du laminé peut effectivement être soudé. Comme le montre la figure 5, l'ajout de matière 8 est nécessaire pour combler la discontinuité 5 qui se forme entre les deux extrémités du laminé 3. Comme le représente la figure 5, l'ajout de matière 8 peut s'étaler sur la surface interne du corps tubulaire 1 afin d'améliorer conjointement la résistance de la zone soudée 2. Il est important de souligner la continuité entre la surface interne du laminé et la surface de l'ajout de matière 8. Comme il l'a été dit précédemment, l'ajout de matière peut être appliqué sous forme d'une bande que l'on fait au moins partiellement fondre lors de son application. Il a été trouvé que cette bande devait de préférence au moins contenir 50% de résine fondue au moment de l'application pour assurer la continuité de la surface interne du corps tubulaire (surface lisse).

Un troisième mode de l'invention est présenté figure 6. Selon ce mode, la face interne du laminé est soudée sur elle-même et forme l'interface soudé 4. Un ajout de matière 8 est utilisé pour supprimer la discontinuité 5 qui se forme sous la soudure et rendre lisse et continue la surface interne du corps tubulaire 1.

Comme on le comprend de la présente description, l'invention permet d'améliorer l'opération d'assemblage de la tête de tube et du corps tubulaire grâce à la suppression de la discontinuité de la couche interne du corps tubulaire par ajout de matière au niveau de ladite discontinuité. L'ajout de matière peut être utilisé également pour lisser la surface externe du corps tubulaire afin d'améliorer ses propriétés esthétiques, sa résistance et ses propriétés barrières.

L'invention permet d'améliorer considérablement la continuité de la couche interne du corps tubulaire. Par exemple, une discontinuité initiale de 400 microns est réduite grâce à l'invention à une valeur inférieure à 50 microns et de préférence inférieure à 20 microns.

L'ajout de matière est monocouche ou multicouche. Il comporte au moins 50% de matière qui se soude sur la face interne du corps tubulaire et sur la face externe du de la tête de tube, et qui fond lors de l'application sur le corps tubulaire afin de supprimer la discontinuité. Avantageusement, cette matière soudante est de nature identique à celle de la face interne du corps tubulaire et de la face externe de la tête de tube.

L'ajout de matière peut être appliqué par extrusion sur la surface interne du laminé au moment de l'opération de soudage du corps tubulaire. L'ajout de matière peut également être réalisé par apport d'un filament ou d'une bande que l'on fait au moins partiellement fondre pendant l'opération de soudage du corps tubulaire.

Cette invention est particulièrement avantageuse pour la réalisation de tubes avec des laminés comportant un fort pourcentage de matière recyclée ou matière issue de ressources renouvelables. Ce laminé comporte au moins une couche soudante de fine épaisseur sur sa face interne qui permet de garantir l'alimentarité et la soudabilité. Cette couche interne se compose par exemple de PE vierge, c'est-à-dire de résine PE habilitée au contact alimentaire. Cette couche de PE vierge peut être issue du circuit de recyclage conformément aux législations en vigueur. L'épaisseur de cette couche est comprise entre 5 et 40 % de l'épaisseur totale et de préférence entre 10 et 20 %. Ce laminé comporte également au moins une couche provenant de matière recyclée ou de matière issue de ressource renouvelable. Le taux en volume dans le laminé de matière recyclé ou de matière issue de ressource renouvelable supérieur à 30% et de préférence supérieur à 50%.

Le laminé comporte avantageusement une couche supplémentaire ayant des propriétés barrière et située entre la couche interne soudable et la couche en matière recyclée ou matière issue de ressource renouvelable. Cette couche barrière peut être un film aluminium, un film d'EVOH, ou un film ayant un revêtement de surface le rendant étanche. Cette couche barrière évite la migration à l'intérieur de l'emballage de substances non alimentaires pouvant être présentes dans les couches recyclées. Le laminé comporte avantageusement d'autres couches formant la surface externe du corps tubulaire. Cette couche externe, peut être un film de protection de type PE ou PET ou un film issu de matière recyclée ou de ressource renouvelable.

Avantageusement, la tête du tube comporte plus de 30% de matière recyclée ou de matière issue de ressource renouvelable et de préférence plus de 50%. La tête de tube comporte une couche interne qui garantit l'alimentarité. Cette couche interne peut être une couche de PE vierge ou un coating. La tête de tube peut être réalisée par injection bi-matière ou compression bi-matière. Alternativement, la tête de tube peut être obtenue par assemblage de deux parties moulées. Une autre méthode d'obtention de la tête de tube consiste à déposer un revêtement sur la partie de la tête de tube qui se trouve en contact avec le produit emballé. Une dernière méthode consiste à surmouler un film (IML) ou un insert formant la surface interne de la tête de tube.

Alternativement, la tête du tube comporte plus de 30% de matière issue de ressources renouvelables et de préférence plus de 50%. Avantageusement, la tête de tube est réalisée par injection ou compression moulage de résine chargée en fibre naturelle (fibre de cellulose) compatible pour un contact direct avec des aliments.

La tête de tube peut être fixée sur le corps tubulaire selon deux méthodes. Une première méthode consiste à pré-fabriquer la tête de tube selon les méthodes décrites précédemment, puis à assembler par soudage la tête de tube et le corps tubulaire par chauffage de l'interface à souder. Une deuxième méthode de fixation dite « par surmoulage » consiste à fixer la tête de tube sur le corps tubulaire conjointement à l'opération de moulage de ladite tête de tube. Dans cette méthode, la chaleur contenue dans la matière moulée est suffisante pour assurer le soudage avec le corps tubulaire.

L'invention ne se limite pas à la réalisation de tubes, elle s'applique également à la confection de bouteilles formées par assemblage d'un corps tubulaire, d'une tête et d'un fond. L'invention préalablement décrite pour assembler la tête et le corps tubulaire peut être utilisée pour faciliter également l'assemblage du fond sur le corps tubulaire. L'invention permet ainsi la confection de bouteilles comportant un fort pourcentage de matière recyclée ou issue de ressources renouvelables.

Avantageusement, le bouchon de l'emballage comporte plus de 30% de matière recyclée ou de matière issue de ressources renouvelables et de préférence plus de 50%. Le bouchon est réalisé par injection ou compression moulage de matière recyclée ou de matière issue de ressources renouvelables. Dans le cas où la matière injectée n'est pas compatible avec des aliments, un opercule de protection est disposé entre le goulot de la tête et le bouchon. Cet opercule est généralement un film ayant une couche interne en PE qui est soudé sur le pourtour du goulot de la tête. Un liner interne permet également d'éviter le contact direct avec les aliments.

### Exemples de réalisation

Laminé (extérieur vers intérieur ; taux (en %) de matière recyclée ou issue de ressources renouvelables) :

| | Taux |
|---|---|
| a) PE recyclé 200 mu / EVOH 10 mu/ PE vierge 40 mu 80% | 80% |
| b) PE recyclé 200 mu / Alu 12mu / PE vierge 40 mu 80% | 80% |
| c) Matière recyclée 50 mu / PE recyclé 100 mu / EVOH 5mu / PE vierge 20 mu 85% | 85% |
| d) PE recyclé 100 mu / Matière recyclée 60 mu / EVOH 10 mu / PE vierge 30 mu 80% | 80% |
| e) PET 12mu / PE recyclé 230 mu / Alu 7 mu / PE vierge 40 mu 80% | 80% |
| f) PE recyclé 80 mu / Papier recyclé 100 mu / EVOH 5 mu / PE vierge 30 mu 84% | 80% |

Ajout de matière :

| | Taux |
|---|---|
| a) PEvierge 42% / PETvierge 16% / PEvierge 42% 0% | 0% |
| b) PEvierge 38% / PETvierge 25% / PEvierge 37% 0% | 0% |
| c) PE vierge 100% 0% | 0% |
| d) PEvierge 45%/EVOHvierge 10%/PEvierge 45% 0% | 0% |

Tête (taux (en %) de matière recyclée ou issue de ressources renouvelables):

| | Taux |
|---|---|
| a) PE recyclé + coating face interne | 99% |
| b) Matière recyclée + insert PE (la zone soudée fait partie de l'insert) | 60% |
| c) PE recyclé / PE vierge par surmoulage | 70% |
| d) PE recyclé / PE vierge par injection ou compression moulage bi-matière | 70% |
| e) Compound PE + fibre de cellulose (chargé à 60%) | 60% |

Fond (taux (en %) de matière recyclée ou issue de ressources renouvelables):

| | |
|---|---|
| a) PE recyclé + coating face interne | 99% |
| b) Matière recyclée + insert PE (la zone soudée fait partie de l'insert) | 60% |
| c) PE recyclé / PE vierge par surmoulage | 70% |
| d) PE recyclé / PE vierge par injection ou compression moulage bi-matière | 70% |
| e)Compound PE + fibre de cellulose (chargé à 60%) | 60% |

Bouchon (taux (en %) de matière recyclée ou issue de ressources renouvelables):

| | |
|---|---|
| a) PE recyclé 100% | 100% |
| b) PE recyclé / PE vierge par surmoulage | 70% |
| c) Compound PE + fibre de cellulose (chargé à 60%) | 60% |

Exemples d'emballage selon l'invention :
i) Tube de diamètre 35mm et de longueur de jupe 140mm composé de :
   - Laminé ayant une masse de 3.7 g, dont 80% de matière recyclée.
   - Ajout de matière ayant une masse de 0.04 g.
   - Tête ayant une masse de 1.7 g, dont 70% de matière recyclée.
   - Bouchon ayant une masse de 1 g, dont 100% de matière recyclée.
   - Opercule ayant une masse de 0.02 g.
   Cet emballage a donc une masse totale de 6. 46 g, dont 80% de matière recyclée. La tête et la jupe sont assemblées par soudage.
ii) Tube de diamètre 35mm et de longueur de jupe 140mm composé de :
   - Laminé ayant une masse de 3.7 g, dont 60% de matière issue de ressources renouvelables.
   - Ajout de matière de largeur 4mm et épaisseur moyenne de 80mu ayant une masse de 0.04 g.
   - Tête ayant une masse de 1.7 g, dont 60% de matière issue de ressources renouvelables.
   - bouchon ayant une masse de 1 g, dont 60% de matière issue de ressources renouvelables.
Cet emballage a donc une masse totale de 6. 44 g, dont 60% de matière issue de ressources renouvelables. La tête et la jupe sont assemblées par surmoulage.

## Revendications

1. Emballage souple de forme essentiellement tubulaire destiné à contenir un produit semi-liquide ou pâteux, ledit emballage comprenant une jupe, une tête et optionnellement un bouchon, la jupe étant formée par une feuille enroulée et comportant une soudure longitudinale permettant l'assemblage de ses bords ; la tête étant fixée sur le pourtour de l'une des extrémités de la jupe ; ledit emballage étant **caractérisé par le fait que** la jupe comprend un taux d'au moins 30% de matière recyclée ou de matière issue de ressources renouvelables et en ce qu'il comprend un ajout de matière au moins sur le côté intérieur de la jupe de façon à supprimer une discontinuité de la face interne dans la zone de la soudure longitudinale.

2. Emballage selon la revendication 1 **caractérisé par le fait que** le taux dans la jupe de matière recyclée ou de matière issue de ressources renouvelables est supérieur à 50%.

3. Emballage selon la revendication 2 **caractérisé par le fait que** ledit taux est supérieur à 70%.

4. Emballage selon l'une des revendications précédentes **caractérisé par le fait que** le taux dans la tête de matière recyclée ou de matière issue de ressources renouvelables est supérieur à 30%.

5. Emballage selon la revendication 4 **caractérisé par le fait que** le taux dans la tête de matière recyclée ou de matière issue de ressources renouvelables est de préférence supérieur à 50%.

6. Emballage selon l'une des revendications précédentes, **caractérisé en ce qu'**il comprend un fond fixé sur le pourtour de l'autre extrémité de la jupe.

7. Emballage selon la revendication 6 **caractérisé par le fait que** le taux dans le fond de matière recyclée ou de matière issue de ressources renouvelables est supérieur à 30% et de préférence supérieur à 50%.

8. Emballage selon l'une des revendications précédentes **caractérisé par le fait que** la jupe est composée d'une feuille comportant au moins une couche de PE vierge sur sa face interne et au moins une couche provenant de matière recyclée ou de matière issue de ressources renouvelables.

9. Emballage selon l'une des revendications précédentes, **caractérisé en ce que** la soudure longitudinale est effectuée par chevauchement des bords de la feuille formant la jupe et soudage de la face supérieure de la feuille sur la face inférieure de la feuille.

10. Emballage selon l'une des revendications 1 à 8, **caractérisé en ce que** la soudure longitudinale est effectuée par assemblage bout à bout des bords de la feuille formant la jupe.

11. Emballage selon l'une des revendications 1 à 8, **caractérisée en ce que** la soudure longitudinale est effectuée par chevauchement des bords de la feuille formant la jupe et soudage de la face inférieure de la feuille sur elle-même.

12. Emballage selon l'une des revendications précédentes, **caractérisé en ce que** l'ajout de matière couvre au moins l'un des bords de la feuille.

13. Emballage selon l'une des revendications précédentes, **caractérisé par le fait que** l'ajout de matière venant recouvrir la soudure longitudinale de la jupe est également disposé à l'extérieur de la jupe.

14. Emballage selon l'une des revendications précédentes, dans lequel l'ajout de matière s'effecture par extrusion ou soudage.

15. Emballage selon l'une des revendications précédentes, dans lequel l'ajout de matière est monocouche ou multicouche.

16. Emballage selon l'une des revendications précédentes, dans lequel la tête est préfabriquée puis assemblée sur la jupe par soudage.

17. Emballage selon les revendications précédentes, dans lequel la tête de tube est assemblée sur la jupe par surmoulage dans un procédé d'injection ou de compression.
